# EUROPÄISCHE PATENTSCHRIFT

(11) **EP 1 553 790 B1**
(45) Veröffentlichungstag und Bekanntmachung des Hinweises auf die Patenterteilung: **12.11.2008**
(21) Anmeldenummer: 04000157.0
(22) Anmeldetag: 07.01.2004
(51) Int. Cl.: H04Q 7/30

(54) **Mobilfunknetz vom 3GPP-Typ und Betriebsverfahren hierfür**
Mobile radio network of the 3GPP-type and operating method therefor
Réseau de communication mobile du type 3GPP et procédé de fonctionnement correspondant

(43) Veröffentlichungstag der Anmeldung: 13.07.2005
(73) Patentinhaber: Nokia Siemens Networks GmbH & Co. KG, 81541 München (DE)
(72) Erfinder: Milinski, Alexander, 81371 München (DE)

(56) Entgegenhaltungen:
- EP-A- 1 069 738
- WO-A-03/092312
- US-A- 5 887 256
- ETSI: "Digital Cellular telecommunication system (phase 2+) (GSM);Universal Mobile Teleommunications System (UMTS); Inband Tandem Free Operation (TFO) of speech codecs; Service Description; Stage 3 (3GPP TS 28.062 version 5.0.0 Release 5)" ETSI TS 128 062 V5.0.0, XX, XX, März 2002 (2002-03), Seiten 14-19,35-51,56-59,81-88,164-168, XP002248624

## Beschreibung

Die Erfindung betrifft ein Mobilfunknetz nach dem Oberbegriff des Anspruchs 1 sowie ein Verfahren zum Betrieb eines solchen.

Mobilfunknetze der zweiten Generation, und hierbei insbesondere solche nach dem GSM-Standard, haben die bisherige Entwicklung des mobilen Telefonierens und der hiermit verbundenen Dienste getragen und eine höchst dynamische technische und wirtschaftliche Entwicklung ermöglicht. Im Zuge der stetigen Weiterentwicklung dieser Netze sind im sogenannten Radionetz, und zwar speziell in den Transcoding and Rate Adaptation Units (TRAUs), verschiedene Transcodierfunktionen implementiert worden, die auch für die künftige Entwicklung der Mobilfunktechnik von Bedeutung sind.

Mobilfunksysteme der dritten Generation (3GPP-Netze) werden Datendienste in wesentlich höherer Qualität ermöglichen. Für diese Systeme ist eine Implementierung von Transcodierfunktionen im Bereich des sogenannten Corenetzes standardmäßig vorgesehen, und bei der Entwicklung dieser Systeme neu zu erstellende Transcodierfunktionen werden dementsprechend implementiert. Genauer gesagt, werden in Mobilfunknetzen nach 3GPP-Spezifikationen, die ein gemeinsames Corenetz auch für 2G-Spezifikationen haben, Transcoder an zwei Stellen im Netz vorgehalten: zum einen in der TRAU, die Teil des Base Station Systems (BSS) ist, und zum anderen im Media-Gateway (ggf. als Teil des Mobile Service Center = MSC).

Während die Transcoder in der TRAU für die A/Gb-Betriebsart - also Betrieb mit einem Radionetz der zweiten Generation nach GSM-Standard (GERAN) - verwendet werden, werden die Transcoder im Media-Gateway (MGW) in der Iu-Betriebsart - also beim Betrieb mit einem Radionetz der dritten Generation nach UMTS-Standard (UTRAN) - verwendet. Nach diesem Prinzip erfordert die Einführung eines neuen Codec, der gleichermaßen für den A/Gb-Modus (Betriebsart) wie für den Iu-Modus eingesetzt werden soll, eine doppelte Bereitstellung der entsprechenden Transcodierfunktion im Mobilfunknetz, nämlich sowohl in der TRAU wie auch im MGW. Da diese Funktion dann in zwei verschiedenen Hardwarekomponenten implementiert, bereitgestellt und betrieben werden muss, bedeutet dies einen erheblichen Aufwand.

Diese Problematik ist (neben anderen) derzeit Gegenstand von Diskussionen im technischen Report TR23.977 des 3GPP-Forums, und der derzeitige Stand ist in Version 0.4.0 hiervon, Abschnitt 10, sowie in den 3GPP SA2-Beiträgen S2-034219 und S2-034221 beschrieben. Hier wurde vorgeschlagen, die TRAU-Funktionalität für den A/Gb-Modus in den MGW zu integrieren. Nachteilig hierbei wäre insbesondere, dass der MGW nun eine - in Bezug auf ihn - neue Schnittstelle mit neuem Datenformat unterstützen müsste und ein erheblicher Teil der gesamten TRAU-Funktionalität, soweit diese über das reine Transcodieren hinausgeht, hierfür im MGW erneut zu implementieren wäre.

In der WO 03/092312 A1 werden alle Transcodierfunktionen sowohl im TRAU als auch im MGW bereitgestellt.

Der Erfindung liegt die Aufgabe der Bereitstellung eines hinsichtlich der Transcodierfunktionen einfach und kostengünstig realisierbaren Mobilfunknetzes der dritten Generation sowie eines entsprechenden Verfahrens zum Betrieb eines solchen zugrunde.

Diese Aufgabe wird in ihrem Vorrichtungsaspekt durch ein Mobilfunknetz mit den Merkmalen des Anspruchs 1 und in ihrem Verfahrensaspekt durch ein Verfahren mit den Merkmalen des Anspruchs 6 gelöst. Zweckmäßige Fortbildungen des Erfindungsgedankens sind Gegenstand der abhängigen Ansprüche.

Die Erfindung schließt den wesentlichen Gedanken ein, zur Aufwands- und Kostenersparnis eine Neu-Implementierung bereits fertig entwickelt vorliegender Transcodierfunktionen aus Mobilfunknetzen der zweiten Generation zu vermeiden. Sie schließt des weiteren den Gedanken ein, zu diesem Zweck bereits verfügbare Transcodierfunktionen wie bei den bisherigen Netzen im Bereich des Radionetzes und speziell der TRAU zu belassen, also ausschließlich dort vorzuhalten.

Erfindungsgemäß werden also gleichzeitig die TranscodierFunktion für einen Teil der Codecs - insbesondere die bereits bei Netzen der zweiten Generation existierenden Codecs, speziell GSM-Codecs wie FR und HR - in der A/Gb-Betriebsart weiterhin in der TRAU (also im Radionetz) und die Transcodier-Funktionen für andere (insbesondere neu zu entwickelnde bzw. für die 3GPP-Systeme bereits bereitgestellte) Codecs, wie z.B. AMR oder AMR-WB auch für die A-/Gb- bzw. GERAN-Betriebsart im MGW bereitgestellt.

Hier liegt der wesentliche Vorteil des erfindungsgemäßen Verfahrens, nämlich die Möglichkeit, jeden Codec nur an einer Stelle im Netz bereitzustellen und insbesondere neue Codecs allein im MGW (und damit für den Iu-Modus ebenso wie für den A/Gb-Modus) zu implementieren und bereitzustellen.

Der zu verwendende Codec wird, wie bisher, beim Aufbau einer Verbindung bestimmt. Hierbei ist entweder durch die Konfiguration sowohl im BSS wie auch im Corenetz bekannt, für welchen Codec die Transcodierfunktion an welcher Stelle genutzt werden, oder es wird im Rahmen der Bestimmung des Codecs zugleich der Ort der Transcodierung (TRAU oder MGW) ausgehandelt.

Wird die Transcodierfunktion in der TRAU verwendet, können die aus den Mobilfunknetzen der zweiten Generation vorhandenen Mechanismen unverändert weiter benutzt werden. Wird hingegen eine Transcodierfunktion im Media-Gateway verwendet, ist eine Erweiterung der (Signalisierungs-)Nachrichten am A-Interface sowie zwischen Base Station Controler (BSC) und TRAU vorzusehen, ggf. auch eine Erweiterung der Nachrichten am Mc-Interface. Vorzugweise sind mindestens am A-Interface Nachrichtenerweiterungsmittel zur Erweiterung des Inhalts von Signalisierungsnachrichten zum Einschluss von den Ort der Transcodierung betreffender Information vorgesehen. Vorzugsweise sind auch am MC-Interface Nachrichtenerweiterungsmittel zur Erweiterung des Inhaltes von Signalisierungsnachrichten zum Einschluss von den Ort der Transcodierung betreffender Information vorgesehen. Vorzugsweise ist die Konfiguration im Basis Station System BSS und Corenetz derart bestimmt, dass sie hinreichende Information zum Ort der Transcodierung enthält. Mit Ausnahme dieser, in ihrer technischen und kostenseitigen Tragweite durchaus begrenzten, Erweiterung bleibt die bestehende Signalisierung unverändert.

Immerhin muss bei Verwendung einer Transcodierfunktion im MGW gleichwohl eine Umformatierung der Sprache in der TRAU erfolgen, und zwar von 16 kbit/s auf 64 kbit/s. Hierbei soll auf der 64 kbit/s-Seite das bereits früher für die sogenannte Tandem Free Operation (TFO) definierte Format verwendet werden, in welchem komprimierte Sprache in 64 kbit/s-Kanälen übertragen werden kann. Jedoch wird im Rahmen der Erfindung das TFO-Datenformat bereits beim Verbindungsaufbau, nämlich im Zusammenhang mit der Festlegung des Codecs und des Ortes der Transcodierung, ausgehandelt oder aber durch die Konfiguration vorbestimmt. Die Möglichkeit der Weiterverwendung des für das TFO definierten Formats stellt einen wesentlichen Vorteil der Erfindung in einer bevorzugten Realisierung dar.

Die vorhandenen Mechanismen der TRAU für CS-Datendienste werden im übrigen weiter verwendet.

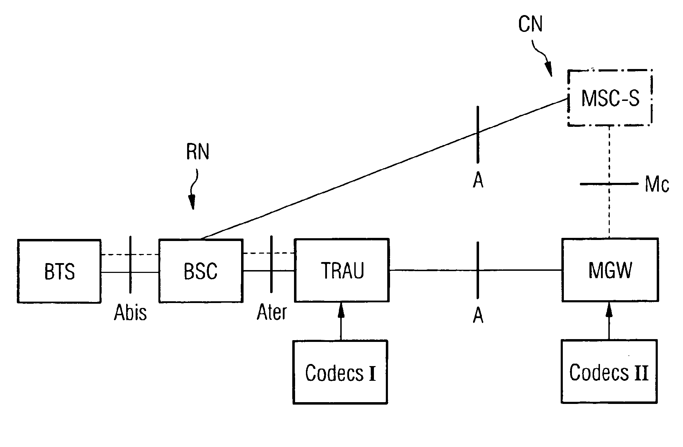

Vorteile und Zweckmäßigkeiten der Erfindung ergeben sich im übrigen aus der nachfolgenden, skizzenhaften Beschreibung des Funktionsprinzips einer Realisierungsform der Erfindung anhand der einzigen Figur. Diese zeigt eine Referenzarchitektur eines erfindungswesentlichen Ausschnittes eines Mobilfunknetzes gemäß geltenden GSM- und 3GPP-Spezifikationen.

Gezeigt sind ein Base-Station-Tranceiver-System BTS, über eine Abis-Schnittstelle verbunden mit einem Base-Station-Controller BSC, der seinerseits über eine Ater-Schnittstelle mit einer zugehörigen TRAU verbunden ist, als Komponenten des Radionetzes RN. Dieses ist über ein A-Interface mit einem Corenetz CN verbunden, von dem in der Figur ein Media-Gateway MGW und - hiermit über ein Mc-Interface verbunden - ein Mobile Services Switching Center MSC-S dargestellt sind. Nach dem derzeitigen Stand der Standardisierung ist nur das A-Interface voll spezifiziert, während es für die Abis- und Ater Schnittstellen nur einige das Nutzdatenformat betreffende Spezifikation gibt. Zu beachten ist weiterhin, dass es mehrere mögliche Konfigurationen im Radionetz gibt; die konkrete Lage der TRAU in Bezug auf BTS, BSC und MSC-S ist nicht verbindlich spezifiziert.

Wesentlich im Kontext der Erfindung ist, dass eine erste Teilmenge von Transcodierfunktionen CodecsI in der TRAU implementiert ist, während eine zweite Teilmenge von Transcodierfunktionen CodecsII im MGW im Corenetz implementiert ist.

Auf die hiermit erzielten Vorteile ist weiter oben hingewiesen. Soweit die Spezifikationen bereits vorliegen, ergibt sich hiermit keine Änderung an der Abis-Schnittstelle, während gegebenenfalls eine neue Indikation bezüglich des Ortes der Transcodierung in den Signalisierungsnachten am Ater und A-Interface benötigt wird. Für Codecs der Gruppe CodecsII wird am A-Interface von Anfang an das TFO Datenformat verwendet.

## Patentansprüche

1. Mobilfunknetz vom 3GPP-Typ mit Mitteln zur Ausführung einer Mehrzahl von Transcodierfunktionen in einer A/Gb-Betriebsart in einer Transcoding and Rate Adaptation Unit TRAU und in einem Media-Gateway MGW,
**gekennzeichnet durch**
ein erstes Mittel zur Ausführung einer ersten Teilmenge der Transcodierfunktionen ausschließlich im Radionetz, nämlich in der TRAU, und
ein zweites Mittel zur Ausführung einer zweiten Teilmenge der Transcodierfunktionen ausschließlich im Corenetz, nämlich im MGW,
wobei die erste Teilmenge Transcodierfunktionen umfasst, die sich bei Mobilfunknetzen der zweiten Generation auf der TRAU befinden, und die zweite Teilmenge Transcodierfunktionen umfasst, die für Mobilfunknetze vom 3GPP-Typ bereitgestellt werden.

2. Mobilfunknetz nach Anspruch 1,
**dadurch gekennzeichnet, dass**
in der TRAU Wandlermittel zur Übertragungsraten-Wandlung einer Sprachübertragung, insbesondere vom Format 16 kbit/s in das Format 64 kbit/s, vorgesehen sind, welche auch für eine im MGW implementierte Transcodierfunktion wirksam sind.

3. Mobilfunknetz nach einem der vorangehenden Ansprüche,
**dadurch gekennzeichnet, dass**
mindestens am A-Interface Nachrichten-Erweiterungsmittel zur Erweiterung des Inhaltes von Signalisierungsnachrichten zum Einschluss von den Ort der Transcodierung betreffender Information vorgesehen sind.

4. Mobilfunknetz nach Anspruch 3,
**dadurch gekennzeichnet, dass**
auch am Mc-Interface Nachrichten-Erweiterungsmittel zur Erweiterung des Inhaltes von Signalisierungsnachrichten zum Einschluss von den Ort der Transcodierung betreffender Information vorgesehen sind.

5. Mobilfunknetz nach einem der Ansprüche 1 bis 2,
**dadurch gekennzeichnet, dass**
die Konfiguration im Basis Station System BSS und Corenetz derart bestimmt ist, dass sie hinreichende Information zum Ort der Transcodierung enthält.

6. Verfahren zur Ausführung einer Mehrzahl von Transcodierfunktionen im Zusammenhang mit dem Betrieb eines Mobilfunknetzes vom 3GPP-Typ,
**gekennzeichnet durch** die Schritte Auswählen einer Transcodierfunktion aus einer ersten oder zweiten Mehrzahl von Transcodierfunktionen beim Aufbau einer Verbindung,
Ausführen der ausgewählten Transcodierfunktion im Radionetz, nämlich in der TRAU, wenn die Transcodierfunktion zu der ersten Mehrzahl von Transcodierfunktionen gehört, die Transcodierfunktionen umfasst, die sich bei Mobilfunknetzen der zweiten Generation auf der TRAU befinden, und Ausführen der ausgewählten Transcodierfunktion im Corenetz, nämlich im MGW, wenn die Transcodierfunktion zu der zweiten Mehrzahl von Transcodierfunktionen gehört, die Transcodierfunktionen umfasst, die für Mobilfunknetze vom 3GPP-Typ bereitgestellt werden.

7. Verfahren nach Anspruch 6,
**dadurch gekennzeichnet, dass**
bereits beim Verbindungsaufbau bei Auswahl einer Transcodierfunktion aus der zweiten Mehrzahl eine Umformatierung der Sprache aus einem Format 16 kbit/s in ein Tandem-Free-Operation-TFO-Datenformat ausgeführt wird.

8. Verfahren nach Anspruch 6 oder 7,
**dadurch gekennzeichnet, dass**
die Auswahl einer geltenden Transcodierfunktion und wahlweise die Umformatierung einer Sprache beim Verbindungsaufbau ausgehandelt wird.

9. Verfahren nach Anspruch 8,
**dadurch gekennzeichnet, dass**
vorgegebene Signalisierungsnachrichten mindestens am A-Interface sowie zwischen dem BSC und der TRAU, optional auch am Mc-Interface, um eine einen Ort der Transcodierung betreffende Information erweitert werden.

## Claims

1. Mobile radio network of the 3GPP type with means for executing a multiplicity of transcoding functions in an A/Gb operating mode in a transcoding and rate adaptation unit TRAU and in a media gateway MGW,
**characterized by** a first means for executing a first subset of the transcoding functions exclusively in the radio network, namely in the TRAU, and
a second means for executing a second subset of the transcoding functions exclusively in the core network, namely in the MGW,
wherein the first subset comprises transcoding functions which are located on the TRAU in second-generation mobile radio networks and the second subset comprises transcoding functions which are provided for mobile radio networks of the 3GPP type.

2. Mobile radio network according to Claim 1, **characterized in that** in the TRAU, converter means for transmission rate conversion of a voice transmission, particularly of the 16 kbit/s format into the 64 kbit/s format, are provided which are also effective for a transcoding function implemented in the MGW.

3. Mobile radio network according to one of the preceding claims, **characterized in that** message expanding means for expanding the content of signalling messages for the inclusion of information relating to the location of the transcoding are provided at least at the A interface.

4. Mobile radio network according to Claim 3, **characterized in that** message expanding means for expanding the content of signalling messages for the inclusion of information relating to the location of the transcoding are also provided at the Mc interface.

5. Mobile radio network according to one of Claims 1 to 2,
**characterized in that** the configuration in the base station system BSS and the core network is determined in such a manner that it contains sufficient information relating to the location of the transcoding.

6. Method for executing a multiplicity of transcoding functions in conjunction with the operation of a mobile radio network of the 3GPP type, **characterized by** the steps selecting a transcoding function from a first or second multiplicity of transcoding functions during the setting-up of a connection,
executing the selected transcoding function in the radio network, namely in the TRAU, when the transcoding function belongs to the first multiplicity of transcoding functions which comprises transcoding functions which are located on the TRAU in second-generation mobile radio networks, and
executing the selected transcoding function in the core network, namely in the MGW, when the transcoding function belongs to the second multiplicity of transcoding functions which comprises transcoding functions which are provided for mobile radio networks of the 3GPP type.

7. Method according to Claim 6, **characterized in that** during the selection of a transcoding function from the second multiplicity, a reformatting of the language from a 16 kbit/s format into a tandem-free-operation TFO data format is already carried out during the connection set-up.

8. Method according to Claim 6 or 7, **characterized in that** the selection of a valid transcoding function and optionally the reformatting of a language is negotiated during the connection set-up.

9. Method according to Claim 8, **characterized in that** predetermined signalling messages are expanded by information relating to a location of the transcoding at least at the A interface and between the BSC and the TRAU, optionally also at the Mc interface.

## Revendications

1. Réseau de téléphonie mobile du type 3GPP comprenant des moyens pour l'exécution d'une pluralité de fonctions de transcodage dans un mode de service A/Gb dans une Transcoding and Rate Adaptation Unit TRAU et dans une passerelle de médias MGW,
**caractérisé par**
un premier moyen pour l'exécution d'un premier sous-ensemble des fonctions de transcodage uniquement dans le réseau radio, c'est-à-dire dans la TRAU, et
un second moyen pour l'exécution d'un second sous-ensemble des fonctions de transcodage exclusivement dans le réseau "core", c'est-à-dire dans le MGW,
le premier sous-ensemble comprenant des fonctions de transcodage qui se trouvent dans des réseaux de téléphonie mobile de la seconde génération sur la TRAU, et le second sous-ensemble comprenant des fonctions de transcodage qui sont mises à disposition pour des réseaux de téléphonie mobile du type 3GPP.

2. Réseau de téléphonie mobile selon la revendication 1,
**caractérisé en ce que**
des moyens convertisseurs pour la conversion des taux de transmission d'une transmission de parole, en particulier du format 16 kbit/s en le format 64 kbit/s, sont prévus dans la TRAU, lesquels moyens sont efficaces également pour une fonction de transcodage mise en place dans le MGW.

3. Réseau de téléphonie mobile selon l'une quelconque des revendications précédentes,
**caractérisé en ce que**
des moyens d'extension de messages sont prévus au moins sur l'interface A pour l'extension du contenu de messages de signalisation pour l'inclusion de l'information concernant l'emplacement du transcodage.

4. Réseau de téléphonie mobile selon la revendication 3,
**caractérisé en ce que**
des moyens d'extension de messages sont prévus également sur l'interface Mc pour l'extension du contenu de messages de signalisation pour l'inclusion d'information concernant l'emplacement du transcodage.

5. Réseau de téléphonie mobile selon l'une quelconque des revendications 1 à 2,
**caractérisé en ce que**
la configuration dans le Basis Station System BSS et le réseau "core" est déterminée de telle sorte qu'elle contient une information suffisante concernant l'emplacement du transcodage.

6. Procédé pour réaliser une pluralité de fonctions de transcodage en rapport avec le fonctionnement d'un réseau de téléphonie mobile du type 3GPP,
**caractérisé par** les étapes
sélection d'une fonction de transcodage à partir d'une première ou d'une seconde pluralité de fonctions de transcodage lors de l'établissement d'une liaison
exécution de la fonction de transcodage sélectionnée dans le réseau radio, c'est-à-dire dans la TRAU, lorsque la fonction de transcodage appartient à la première pluralité de fonctions de transcodage, qui comprend des fonctions de transcodage qui se trouvent dans le cas de réseaux de téléphonie mobile de la seconde génération sur la TRAU, et
exécution de la fonction de transcodage sélectionnée dans le réseau "core", c'est-à-dire dans le MGW, lorsque la fonction de transcodage fait partie de la seconde pluralité de fonctions de transcodage, qui comprend des fonctions de transcodage qui sont mises à disposition pour des réseaux de téléphonie mobile du type 3GPP.

7. Procédé selon la revendication 6,
**caractérisé en ce que**
un reformatage de la parole à partir d'un format 16 kbit/s dans un format de données Tandem-Free-Operation (TFO) est réalisé déjà lors de l'établissement de la liaison lors du choix d'une fonction de transcodage à partir de la seconde pluralité.

8. Procédé selon la revendication 6 ou 7,
**caractérisé en ce que**
le choix d'une fonction de transcodage en vigueur et en option le reformatage d'une parole sont négociés lors de l'établissement de la liaison.

9. Procédé selon la revendication 8,
**caractérisé en ce que**
des messages de signalisation prédéfinis sont étendus au moins sur l'interface A ainsi qu'entre le BSC et la TRAU, en option également sur l'interface Mc, avec une information concernant un emplacement du transcodage.
